# EUROPEAN PATENT APPLICATION

(11) **EP 3 299 115 A1**
(43) Date of publication of application: **28.03.2018**
(21) Application number: 16814351.9
(22) Date of filing: 21.06.2016
(51) Int. Cl.: B23K 35/363, B23K 1/00, B23K 1/19, F28F 1/30, B23K 101/14, B23K 103/10

(54) **FLUX FLUID**

(30) Priority: 24.06.2015 JP 2015127074
(71) Applicant: UACJ Corporation, Tokyo 100-0004 (JP)
(72) Inventor: UEDA Kaoru, Tokyo 100-0004 (JP); OGIHARA Kana, Tokyo 100-0004 (JP)
(74) Representative: Kramer Barske Schmidtchen Patentanwälte PartG mbB
(86) International application number: PCT/JP2016/068397
(87) International publication number: WO 2016/208581

(57) **Abstract**

A flux fluid is provided that makes possible improvements in the hydrophilicity and its stability of a heat exchanger composed of a tube and a fin that are brazed and joined to each other, and improvements in brazeability. It is a flux fluid (101) that can be used to manufacture the heat exchanger by brazing and joining a tube (3) composed of aluminum and a fin (2) composed of aluminum. The flux fluid (101) contains a fluoride-based flux, colloidal silica, and a dispersion medium. The mass ratio of the colloidal silica with respect to the fluoride-based flux is 1/200 to 1/15.

## Description

### TECHNICAL FIELD

The present invention relates to a flux fluid that can be used to manufacture a heat exchanger by brazing and joining a tube composed of aluminum and a fin composed of aluminum.

### BACKGROUND ART

A heat exchanger made entirely of aluminum generally includes an aluminum tube, through which a refrigerant flows, and an aluminum fin for performing heat exchange with air outside of the aluminum tube; the tube and the fin are joined to each other. Because the heat exchanging properties of the heat exchanger are greatly influenced by the hydrophilicity of the fin, fins having a hydrophilic coating film formed on its surface are widely used. For example, brazing is employed to join a fin having such a hydrophilic coating film with a tube.

However, because common resin coating films or inorganic coating films deteriorate or decompose at the heating temperatures during brazing, sufficient hydrophilicity cannot be expected after brazing. In addition, when a flux is used in brazing and a coating film is present, there is a risk that the flux activity may be inhibited and the brazed joint will be inadequate. For this reason, when a heat exchanger is manufactured by brazing, the formation of the coating film has been performed after the brazing, as shown, for example, in Patent Document 1. However, in this case, because dedicated coating film forming equipment is required, manufacturing costs increase, and it is problematic that upsizing of heat exchangers is difficult.

Therefore, with the intention of improving the hydrophilicity, a fin material having a coating film mainly composed of silicate has been proposed in Patent Document 2 as a fin material that is pre-coated with a coating film prior to brazing. In addition, in Patent Document 3, a method has been proposed that manufactures a heat exchanger using a fin on which a covering film containing a support such as xylene and a silicon-based binder such as a silicone oil are formed in advance prior to brazing.

### PRIOR ART DOCUMENTS

### Patent Documents

Patent Document 1: JP-A-2004-347314
Patent Document 2: JP-A-2013-137153
Patent Document 3: JP-T-2008-508103

### SUMMARY OF THE INVENTION

### PROBLEM TO BE SOLVED BY THE INVENTION

However, even in a heat exchanger manufactured using a fin that has been pre-coated with a coating film or a covering film as described above, there is room for improving the hydrophilicity after brazing when a flux is used, and there has been a demand for further improvements in initial hydrophilicity and its stability. In addition, there is a risk that the brazing joint between the fin and the tube that used flux will be inadequate owing to the presence of the pre-coated coating film or covering film.

The present invention has been made in view of this background, and it is intended to provide a flux fluid that makes it possible to improve the hydrophilicity and its stability of a heat exchanger made by brazing and joining a tube and a fin, and at the same time makes possible an improvement in brazeability.

### MEANS FOR SOLVING THE PROBLEM

One aspect of the present invention is a flux fluid that can be used to manufacture a heat exchanger by brazing and joining a tube composed of aluminum and a fin composed of aluminum, including:
a fluoride-based flux;
colloidal silica; and
a dispersion medium that disperses the fluoride-based flux and the colloidal silica;
wherein the mass ratio of the colloidal silica with respect to the fluoride-based flux is 1/200 to 1/15.

### EFFECTS OF THE INVENTION

The aforementioned flux fluid includes a fluoride-based flux, colloidal silica, and a dispersion medium that disperses them; the content of the colloidal silica is adjusted within the predetermined range described above in terms of the mass ratio with respect to the fluoride-based flux. As a result, it is possible to improve brazeability in the brazed joint, and at the same time hydrophilicity can be imparted to the fin, etc. In other words, the effects of improved brazeability and improved hydrophilicity can be combined. Consequently, it is possible to use the flux fluid not only on a pre-coated-type fin that has a hydrophilic coating film on a surface of the fin composed of aluminum (hereinafter referred to as "a pre-coated fin", as needed) but also on a bare-type fin that has no coating film (hereinafter referred to as "a bare fin", as needed); in both cases, the flux fluid can exhibit the effects of improving brazeability and hydrophilicity of the fin. Further, when the flux fluid is used on a bare fin, it is also possible to prevent the brazeability from being impaired owing to the presence of the coating film. Furthermore, because hydrophilicity has been imparted by the flux fluid, it is no longer invariably necessary to form a coating film for imparting hydrophilicity after brazing. Therefore, dedicated coating film forming equipment is not required, an increase in manufacturing cost can be prevented, and it is possible to cope with an upsizing of the heat exchanger. It is noted that, with regard to the aforementioned effect of improving hydrophilicity owing to the flux fluid, in addition to the effect of improving hydrophilicity at an initial stage of use, it also includes an effect of sustaining the initial hydrophilicity.

### BRIEF DESCRIPTION OF THE DRAWINGS

Figure 1 is a perspective view of a core portion (a mini-core) of a heat exchanger according to Embodiment 1.
Figure 2 is a sectional view of the core portion (the mini-core) of the heat exchanger according to Embodiment 1.
Figure 3 is an enlarged sectional view of a fin of the heat exchanger according to Embodiment 1.
Figure 4 is illustrations showing cross sectional structures of the fin and a tube according to Embodiment 1. (a) shows the cross sectional structure before joining by brazing. (b) shows the cross sectional structure after joining by brazing.
Figure 5 is an elevational view of a heat exchanger according to Embodiment 2.
Figure 6 is a perspective view of a core portion (a mini-core) of a heat exchanger according to Modification 1.
Figure 7 is a sectional view of the core portion (the mini-core) of the heat exchanger according to Modification 1.
Figure 8 is an enlarged sectional view of a fin of the heat exchanger according to Modification 1.
Figure 9 is illustrations showing cross sectional structures of the fin and a tube according to Modification 1. (a) shows the cross sectional structure before joining by brazing. (b) shows the cross sectional structure after joining by brazing.

### MODES FOR CARRYING OUT THE INVENTION

In the present specification, "aluminum" is a general term that includes not only pure aluminum but also aluminum alloys. That is, materials for the tube(s) include not only pure aluminum but also aluminum alloys, and materials for the fin(s) include not only pure aluminum but also aluminum alloys. Specifically, aluminum materials such as A1000-series pure aluminum or A3000-series aluminum alloy can be used.

As for the tube(s), the shape of a round tube, a flat tube, etc. can be utilized. Within the tube, interior pillars that divide the internal space into a plurality of passages may be formed. More specifically, for example, a flat, multi-holed tube can be utilized as the tube(s).

For example, a tube that is formed by processing a brazing sheet into the shape of a round tube or a flat tube can be used as the tube(s). The brazing sheet is made by cladding a brazing material on a core material composed of aluminum; the brazing material may be clad on one surface or both surfaces. When a tube made by processing such a brazing sheet is used, it is not necessary to apply a brazing material separately at the time of joining. Thus, the tube is preferably a clad tube having a brazing material that has been clad on the surface(s). For example, an Al-Si based alloy powder, a Si powder, an Al-Si-Zn based alloy powder, etc. may be used as the brazing material clad on the core material. It is noted that, among the brazing material powders, Si powders can act as a brazing material by forming an Al-Si based alloy with Al contained in the tube and/or fin when heated for brazing. In addition, a flux or a binder resin can be added to the aforementioned brazing material. As the flux, for example, fluoride-based flux powders such as a potassium fluoroaluminate, a potassium fluorozincate, etc. may be used. As the binder resin, for example, an acrylic resin, etc. may be used. In addition, as the tube(s), it is possible to also use a bare tube that is not cladded with brazing material, etc.

Various shapes can be utilized for the fin(s), for example, a corrugated fin, a plate fin, a pin fin, etc. In order to increase heat exchange performance, the fin may have a slit. Further, as the fin(s), a clad fin having a brazing material clad on its surface can be used, a pre-coated fin having a hydrophilic coating film formed on its surface can be used, or a bare fin can be used in which a brazing material, a coating film, etc. is not formed thereon. In case a clad fin is used, the same material as the aforementioned powders can be used as the brazing material; in addition, the aforementioned flux and/or binder resin also can be mixed in the brazing material. The clad fin may be single-sided clad or double-sided clad. In case a pre-coated fin is used, a hydrophilic coating film can be formed by applying a coating material containing colloidal silica and drying the coating material. The coating material for forming the hydrophilic coating film may further contain water glass and/or an organic resin. The hydrophilic coating film on the pre-coated fin may be formed on one surface or may be formed on both surfaces thereof.

Preferably, the fin(s) may be a clad fin or a bare fin. In this case, the hydrophilicity-imparting effect of the flux fluid can be fully utilized, and it is effective to impart hydrophilicity even to a fin that does not have a hydrophilic coating film. In addition, in the case of the clad fin, it is not necessary to use a separate brazing material at the time of joining.

A heat exchanger can be obtained by brazing and joining a tube and a fin. Joining by brazing can be performed by applying a brazing material to a join part between the tube and the fin, applying a flux fluid to, for example, the join part and the fin, and heating the join part. When a tube or a fin that is clad with a brazing material is used, it is not necessary to use a separate brazing material because the blazing material has already been applied to the join part.

The flux fluid includes a fluoride-based flux, colloidal silica, and a dispersion medium for dispersing them. As the dispersion medium, for example, water can be used. As the fluoride-based flux, for example, a potassium fluoroaluminate such as KAlF₄, K₂AlF₅, K₃AlF₆, etc. can be used. In addition, as the fluoride-based flux, a potassium fluorozincate such as KZnF₃ can be used. As the fluoride-based flux, the aforementioned compounds can be used singly or in combination. As the fluoride-based flux, for example, those having an average primary particle size of 1 to 50 nm can be used. The average primary particle size of the fluoride-based flux corresponds to the particle size at the cumulative volume of 50% in a particle size distribution determined by a laser diffraction-scattering method.

In the flux fluid, the mass ratio of the colloidal silica to the fluoride-based flux is preferably 1/200 to 1/15. In other words, the content C_{F} (parts by mass) of the fluoride-based flux and the content Cₛ (parts by mass) of the colloidal silica preferably satisfy the relationship of 1/200 ≦ C_{S}/C_{F} ≦ 1/15. When C_{S}/C_{F} < 1/200, in which the content of the colloidal silica is too small, there is a risk that stability of the hydrophilicity on a heat exchanger manufactured using the flux fluid may be insufficient. In order to further increase the stability of the hydrophilicity, the relationship of C_{S}/C_{F} ≧ 1/150 is more preferable, and the relationship of C_{S}/C_{F} ≧ 1/100 is further preferable. On the other hand, when C_{S}/C_{F} > 1/15, in which the content of the fluoride-based flux with respect to the content of the colloidal silica is too small, there is a risk that the brazeability may be insufficient. In order to further improve the brazeability, the relationship of C_{S}/C_{F} ≦ 1/20 is more preferable. It is noted that, with regard to preferable numerical ranges in the present specification, they can be determined based on all combinations of the upper and lower limits.

The average particle size of the primary particles (i.e., the average primary particle size) of the colloidal silica is preferably 1-800 nm. In this case, the brazeability and the hydrophilicity can be improved at higher level. In order to improve the brazeability and the hydrophilicity more surely and at an even higher level, the average primary particle size of the colloidal silica is more preferably 1-500 nm. The average primary particle size of the colloidal silica can be obtained by drying the colloidal silica, obtaining its specific surface area using a BET method, and then calculating based on the weight and density. The colloidal silica is dispersed in the flux fluid, for example, as individual particles or as aggregates of particles.

Heating at the time of the brazing is performed, for example, in an inert gas atmosphere at a maximum attained temperature of 570°C to 610°C. The brazing material is melted by this heating at the contact part(s) of the fin and the tube, and the melted brazing material is hardened by subsequent cooling. In this way, it is possible to braze and join the fin and the tube.

The heat exchanger has a core portion composed of a fin and a tube that is brazed and joined to the fin. Although specific examples of the heat exchanger will be described in the following embodiments with reference to the drawings, the heat exchanger is manufactured by mounting components, such as a header, a side support, and an outlet/inlet pipe, onto the core portion.

The heat exchanger can be used, for example, in an air conditioner or a refrigerator. In addition, it can also be used in a condenser, an evaporator, a radiator, a heater, an intercooler, an oil cooler, etc. of an automobile. Further, it can also be used in a cooling device for cooling a heat generating element, such as an IGBT (Insulated Gate Bipolar Transistor), installed in an inverter unit that controls a drive motor of a hybrid vehicle or an electric vehicle.

### Embodiments

### (Embodiment 1)

The present examples are examples in which a plurality of flux fluids according to working examples and comparative examples were prepared, and their performances were evaluated and compared. Specifically, core portions were prepared using each of these flux fluids and evaluations of brazeability and hydrophilicity (i.e. initial hydrophilicity and hydrophilicity stability) were performed. In the present examples, mini-cores for testing were prepared as the core portions.

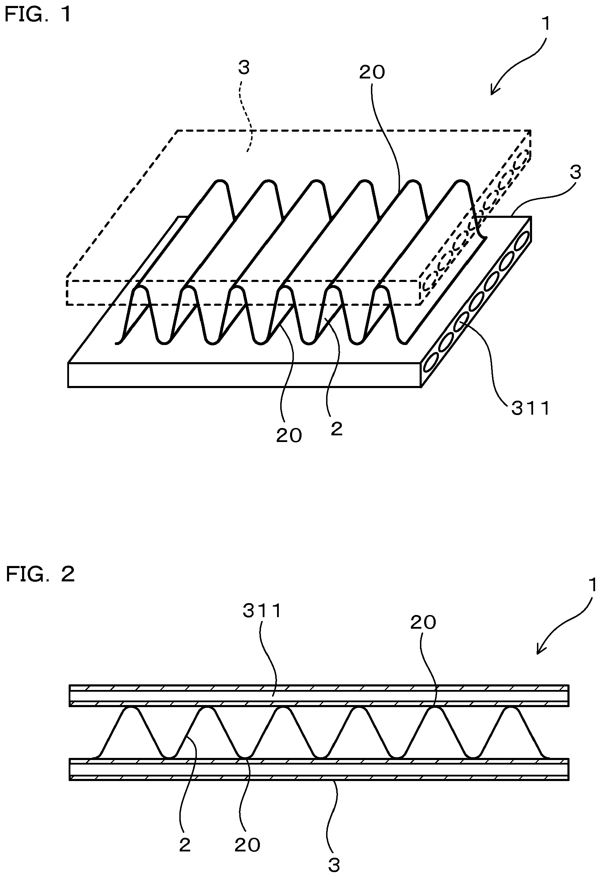

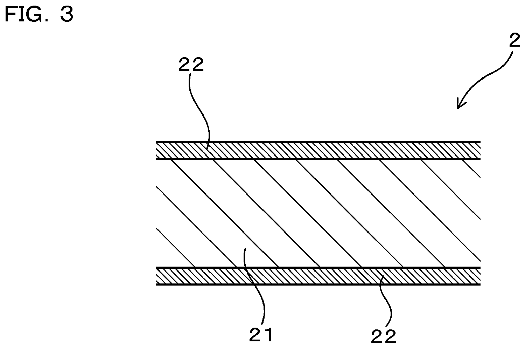

As shown in Figures 1 and 2, a mini-core 1 includes a fin 2 and tubes 3; the fin 2 having a corrugated shape is interposed between the tubes 3. It is noted that, to clearly show the corrugated shape of the fin 2 in Figure 1, one of the tubes 3 that sandwich the fin 2 is shown in broken lines. As shown in Figures 1 to 3, the fin 2 includes a fin material 21, which is composed of an aluminum plate that has been formed into a corrugated shape, and a brazing material layer 22 that has been clad onto both surfaces of the fin material 21.

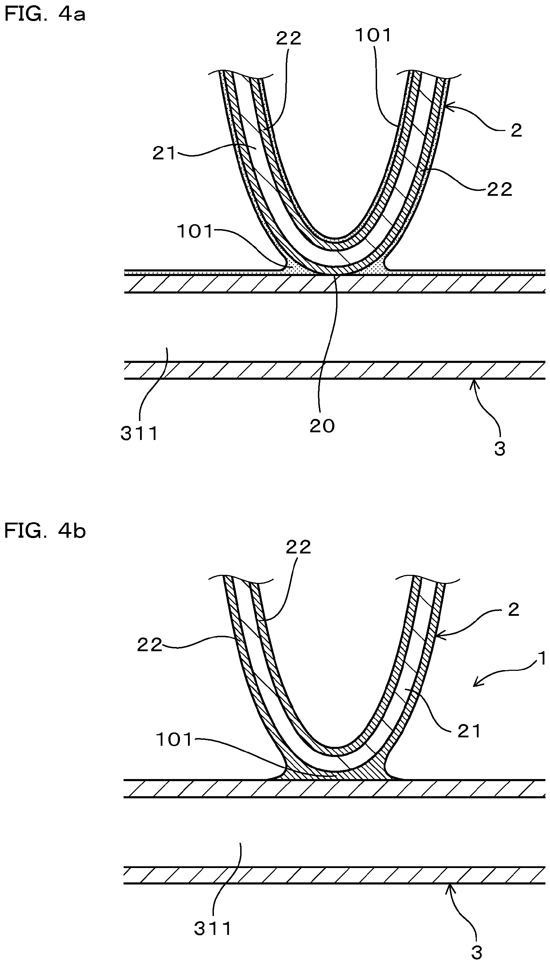

As shown in Figures 1 and 2, the tubes 3 are composed of flat, multi-holed tubes. The tubes 3 have a number of refrigerant flow paths 311 for circulating a refrigerant. In the mini-core 1, as shown in Figure 4(b), by brazing and joining the fin 2 and the tubes 3, join parts 100 are formed between the fin 2 and the tubes 3.

Hereinafter, a manufacturing method of the mini-core 1 of the present embodiment will be described. Specifically, a brazing sheet, which has a brazing material composed of an Al-Si alloy clad onto both surfaces of a plate-shaped core material composed of an aluminum alloy, was first prepared as the fin material; subsequently, the brazing sheet was processed into a corrugated shape. In this way, the fin 2 (refer to Figures 1 to 3) having the brazing material layer 22 clad on both surfaces of the fin material 21 composed of the aluminum plate was obtained. Next, the tubes 3 (refer to Figures 1 and 2), which are composed of the flat, multi-holed tubes made of 3000-series aluminum alloy, were prepared by extrusion.

Next, an assembly was prepared by interposing the fin 2 having the corrugated shape between the two tubes 3 (refer to Figures 1 and 2). In this way, the brazing material layer 22 at each vertex 20 of the fin 2 having the corrugated shape was brought into contact with the surfaces of the tubes 3.

Next, each flux fluid having the compositions shown in the following Table 1 was prepared; as shown in Figure 4(a), each flux fluid 101 was respectively sprayed onto an entire assembly composed of the fin 2 and the tube 3. Thereafter, the assemblies were held in a furnace at 600°C in a nitrogen gas atmosphere for three minutes, and then cooled to room temperature (25°C). The brazing material layer 22 of the fin 2 at least partially melts when heated in the furnace, and the melted brazing material layer 22 hardens when cooled. By melting and hardening the brazing material layer 22, the fin 2 and the tubes 3 are joined at the contact parts and the join parts 100 are formed (refer to Figure 4(b)). In this way, the mini-core 1 as shown in Figures 1 and 2 was obtained. In the present examples, a plurality of the mini-cores 1 were prepared using each of the plurality of flux fluids that have different compositions as shown in Table 1. It is noted that NOCOLOK, which was used as the fluoride-based flux in the following Table 1, is a commercial product manufactured by SOLVAY SA, and FL7 is a commercial product manufactured by MORITA CHEMICAL INDUSTRIES CO., LTD. As for the colloidal silica, Cataloid SI-550, which is an amorphous colloidal silica manufactured by JGC Catalysts and Chemicals Ltd., was used. The flux fluids were prepared by dispersing the colloidal silica and the fluoride-based flux in water, which is the dispersion medium, in the combinations shown in Table 1. The amount of the dispersion medium can be appropriately adjusted so as to achieve a viscosity suitable for coating.

Next, for each mini-core obtained as described above, evaluations of brazeability, initial hydrophilicity and hydrophilicity stability were performed. The results are shown in Table 1.

### <Brazeability>

The brazed join parts in each mini-core were cut using a cutter knife; the joined lengths L₁ of the fin were divided by the sum of the lengths L₂ of the peak parts of the fin and a joined percentage (L_{1/}L₂×100) is the value expressed in terms of 100 percent. Cases, in which the joined percentage was 90% or more, were assessed as "A⁺"; cases, in which the joined percentage was 70% or more and less than 90%, were assessed as "A"; cases, in which the joined percentage was less than 70%, were assessed as "B".

### <Initial Hydrophilicity>

The evaluation of the initial hydrophilicity was performed using flat test plates having the same structure as that of the fin. That is, the flux fluid of each sample was sprayed on the test plates, and heating, which approximated brazing, was performed. Specifically, the test plates, which were sprayed with the flux fluids, were heated in a furnace at 600°C in a nitrogen gas atmosphere for three minutes. Next, the hydrophilicity was evaluated by measuring the contact angle of water droplets on each test plate. The contact angle was measured using a FACE automatic contact angle meter, "CA-Z", manufactured by Kyowa Interface Science Co., Ltd. Specifically, water droplets were dropped on the test plates at room temperature, and after 30 seconds elapsed, the contact angle of the water droplets was measured. Cases, in which the contact angle was 20° or less, were assessed as "A"; cases, in which the contact angle exceeded 20° and was 30°or less, were assessed as "B"; cases, in which the contact angle exceeded 30°, were assessed as "C".

### <Hydrophilicity Stability>

After the aforementioned test plates were immersed in pure water for two minutes, they were air-dried for six minutes. This cycle of the immersing in pure water and airdrying was repeated 300 times. Thereafter, the contact angle of the water droplets was measured in the same way as in the evaluation of the hydrophilicity as described above. Cases, in which the contact angle after 300 cycles was 25° or less, were assessed as "A"; cases, in which the contact angle exceeded 25° and was 40°or less, were assessed as "B"; cases, in which the contact angle exceeded 40°, were assessed as "C".

### [Table 1]

**(Table 1) Composition and Evaluation of Liquid Flux**

| Sample No. | Blending Composition (part by mass) | | | | | Evaluation Result | | |
|---|---|---|---|---|---|---|---|---|
| | Amorphous Colloidal Silica | | Fluoride-based Flux | | | | | |
| | Average Primary Particle Diameter (nm) | Content (part by mass) | NOCOLOK (part by mass) | FL7 (part by mass) | KZnF3 (part by mass) | Brazability | Initial Hydrophilicity | Hydrophilicity Stability |
| Sample 1 | 1 | 1 | 100 | - | - | A+ | A | A |
| Sample 2 | 5 | 1 | 100 | - | - | A+ | A | A |
| Sample 3 | 100 | 1 | 100 | - | - | A+ | A | A |
| Sample 4 | 200 | 1 | 100 | - | - | A+ | A | A |
| Sample 5 | 400 | 1 | 100 | - | - | A+ | A | A |
| Sample 6 | 800 | 1 | 100 | - | - | A | A | A |
| Sample 7 | 5 | 1 | - | 100 | - | A | A | A |
| Sample 8 | 5 | 1 | - | - | 100 | A | A | A |
| Sample 9 | 1 | 1 | 20 | - | - | A+ | A | A |
| Sample 10 | 5 | 1 | 20 | - | - | A+ | A | A |
| Sample 11 | 100 | 1 | 20 | - | - | A+ | A | A |
| Sample 12 | 200 | 1 | 20 | - | - | A+ | A | A |
| Sample 13 | 400 | 1 | 20 | - | - | A+ | A | A |
| Sample 14 | 800 | 1 | 20 | - | - | A | A | A |
| Sample 15 | 5 | 1 | - | 20 | - | A | A | A |
| Sample 16 | 5 | 1 | - | - | 20 | A | A | A |
| Sample 17 | - | - | 1 | - | - | A | A | C |
| Sample 18 | - | - | - | 1 | - | A | A | C |
| Sample 19 | - | - | - | - | 1 | A | A | C |
| Sample 20 | 1 | 1 | 300 | - | - | A | A | B |
| Sample 21 | 5 | 1 | 300 | - | - | A | A | B |
| Sample 22 | 100 | 1 | 300 | - | - | A | A | B |
| Sample 23 | 200 | 1 | 300 | - | - | A | A | B |
| Sample 24 | 400 | 1 | 300 | - | - | A | A | B |
| Sample 25 | 800 | 1 | 300 | - | - | A | A | B |
| Sample 26 | 5 | 1 | - | 300 | - | A | A | B |
| Sample 27 | 5 | 1 | - | - | 300 | A | A | B |
| Sample 28 | 1 | 1 | 10 | - | - | B | A | A |
| Sample 29 | 5 | 1 | 10 | - | - | B | A | A |
| Sample 30 | 100 | 1 | 10 | - | - | B | A | A |
| Sample 31 | 200 | 1 | 10 | - | - | B | A | A |
| Sample 32 | 400 | 1 | 10 | - | - | B | A | A |
| Sample 33 | 800 | 1 | 10 | - | - | B | A | A |
| Sample 34 | 5 | 1 | - | 10 | - | B | A | A |
| Sample 35 | 5 | 1 | - | - | 10 | B | A | A |

As can be understood from Table 1, when the flux fluids of Samples 1 to 16 were used, the brazeability, the initial hydrophilicity, and the hydrophilicity stability all excelled. In contrast, Samples 17 to 19, which did not contain colloidal silica, were inferior in hydrophilicity stability. In addition, Samples 20 to 27, in which the colloidal silica content is small relative to the fluoride-based flux content, had increased hydrophilicity stability as compared to Samples 17 to 19, but the stability was still inadequate. Samples 28 to 35, in which the colloidal silica content is large relative to the fluoride-based flux content, were inferior in brazeability.

Thus, it was found that it is preferable to use a flux fluid that contains a fluoride-based flux, colloidal silica, and a dispersion medium, and has a mass ratio of the colloidal silica to the fluoride-based flux that is 1/200 to 1/15, as in Samples 1 to 16. When a heat exchanger is manufactured by brazing and joining a tube composed of aluminum and a fin composed of aluminum by using such a flux fluid, it is possible to manufacture a heat exchanger that excels in brazeability, initial hydrophilicity, and hydrophilicity stability. Further, in the present examples, the fin 2 has the brazing material layer 22 and a clad fin is used as the fin 2. Thus, it is possible to perform brazing and joining without a brazing material being separately applied.

### (Embodiment 2)

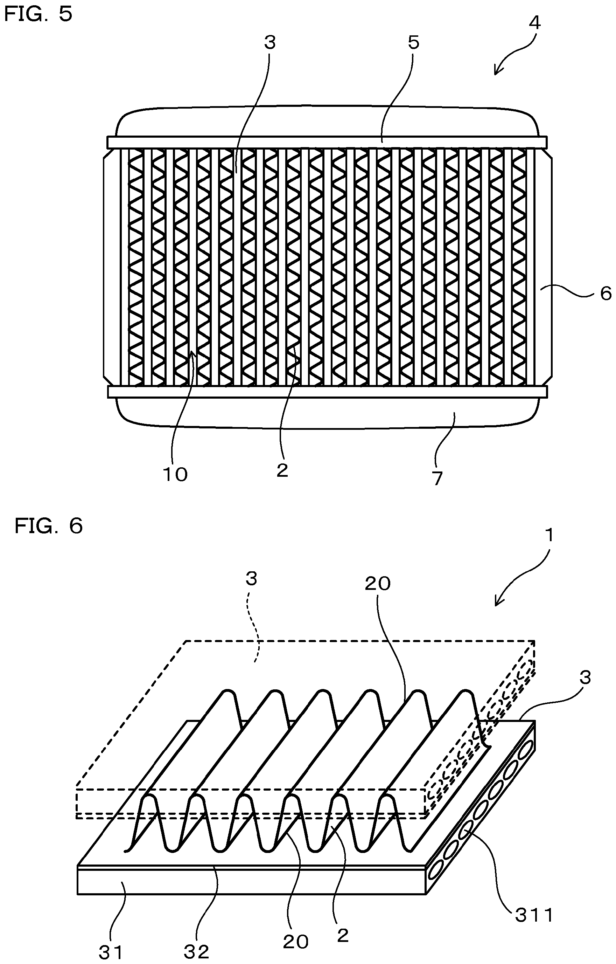

Next, an example of a heat exchanger will be described. As shown in Figure 5, a heat exchanger 4 includes a core portion 10 having a number of the same structures as in the aforementioned mini-cores in Embodiment 1. Specifically, the core portion 10 is formed by alternately laminating the fins 2 having the corrugated shape and the tubes 3, and then brazing and joining the fins 2 and tubes 3 to each other in the same manner as in the mini-cores of Embodiment 1.

Headers 5 are mounted onto both edges of the tubes 3; side plates 6 are mounted onto both edges (the outermost sides) of the core portion 10 in the lamination direction. In addition, tanks 7 are mounted on the headers 5. These headers 5, the side plates 6, and the tanks 7 can be joined, for example, by brazing in the same manner as in the joining of the aforementioned fin 2 and the tubes 3.

In the heat exchanger 4, brazing and joining can be performed using the same flux fluids as Samples 1 to 16 in Embodiment 1. As a result, the heat exchanger 4 obtained after brazing excels in the brazeability between the fins 2 and the tubes 3, and also excels in initial hydrophilicity and hydrophilicity stability.

### (Modification 1)

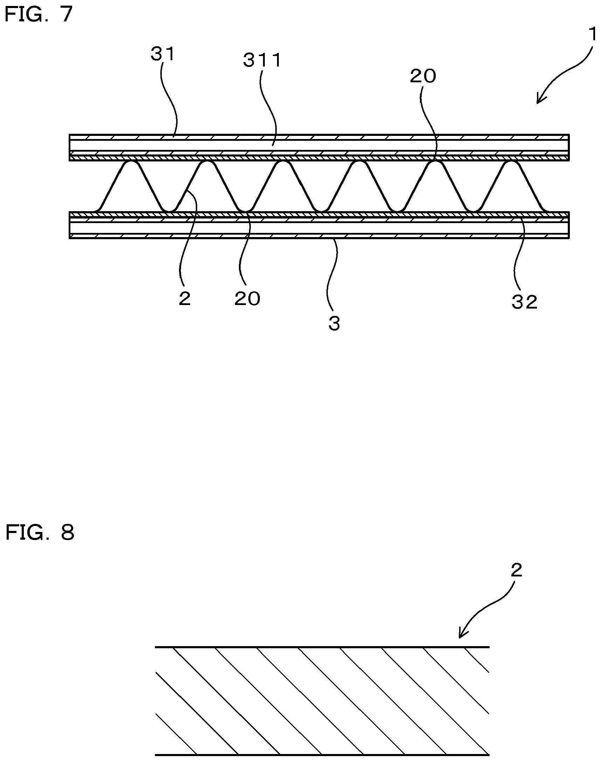

Although a mini-core was explained in Embodiment 1 in which bare tubes and a clad fin were joined together, the present example will be explained with respect to a mini-core in which clad tubes and a bare fin are joined together. As shown in Figures 6 and 7, a mini-core 1 has a fin 2 and tubes 3 in the same manner as in Embodiment 1; the fin 2 having a corrugated shape is interposed between the tubes 3. As shown in Figures 6 to 8, the fin 2 is a bare fin in which a brazing material layer, etc. is not formed on the surfaces of the fin 2.

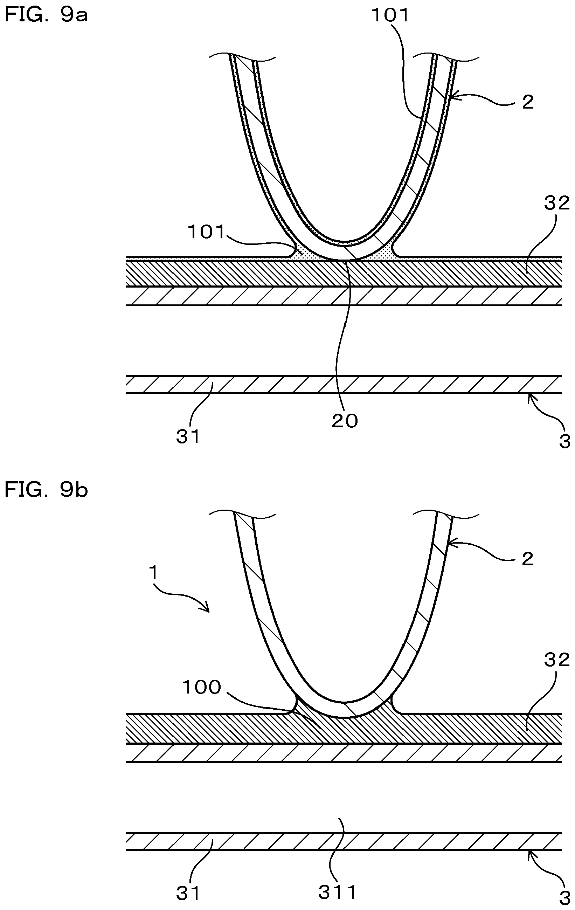

As shown in Figures 6 and 7, the tubes 3 have a core material 31 composed of a flat, multi-hole tube made of aluminum alloy and a brazing material layer 32 formed on the surface of the core material 31. The core material 31 has a number of refrigerant flow paths 311 for circulating a refrigerant. As shown in Figure 9(b), the fin 2 and the tubes 3 are brazed and joined, and join parts 100 are formed between the fin 2 and the tubes 3.

Hereinafter, a manufacturing method of the mini-core 1 of the present example will be described. Specifically, a plate-shaped aluminum sheet of a A1050 composition of the JIS standard was first processed into a corrugated shape. In this way, a fin 2 having the corrugated shape was obtained (refer to Figures 6 to 8).

Subsequently, the core materials 31 composed of flat, multi-hole tubes made of a 3000-series aluminum alloy were prepared by extrusion (refer to Figures 6 and 7). Then, a brazing material layer 32 was formed by applying a brazing material composed of Si powder onto the surfaces of the core materials 31. In this way, the tubes 3 were obtained.

Next, an assembly was prepared by interposing the fin 2 having the corrugated shape between the two tubes 3 (refer to Figures 1 and 2). At that time, each apex 20 of the fin 2 having corrugated shape was brought into contact with the brazing material layers 32 by sandwiching the fin 2 between the two with the brazing material layers 32 of each of the tubes 3 facing each other. Subsequently, as shown in Figure 9(a), a flux fluid 101 was sprayed onto the entire assembly composed of the fin 2 and the tubes 3. Thereafter, the assembly was held in a furnace at 600°C in a nitrogen gas atmosphere for three minutes, and then cooled to room temperature (25°C). The brazing material layers 32 melt when heated in the furnace, and the melted brazing material layers 32 harden when cooled. By melting and hardening the brazing material layers 32, the fin 2 and the tubes 3 are joined to each other and form the join parts 100 (refer to Figure 9(b). In this way, the mini-core 1 as shown in Figures 6 and 7 was obtained. In this example as well, by performing brazing and joining using the same flux fluides as those in Embodiment 1, similar results to those in Embodiment 1 were achieved. That is, the brazeability, the initial hydrophilicity, and the hydrophilicity stability were improved by using the flux fluids of Samples 1 to 16 as compared to cases that used Samples 17 to 35.

Although embodiments and modifications of the present invention were described in detail above, the present invention is not limited to these examples and various modifications are possible within a range that does not deviate from the gist of the present invention.

## Claims

1. A flux fluid that can be used to manufacture a heat exchanger by brazing and joining a tube composed of aluminum and a fin composed of aluminum, comprising:
a fluoride-based flux;
colloidal silica; and
a dispersion medium that disperses the fluoride-based flux and the colloidal silica;
wherein the mass ratio of the colloidal silica with respect to the fluoride-based flux is 1/200 to 1/15.

2. The flux fluid according to claim 1, wherein the average particle size of primary particles of the colloidal silica is 1-500 nm.

3. The flux fluid according to claim 1 or 2, wherein the fin is a clad fin having a brazing material clad on its surface.

4. The flux fluid according to any one of claims 1 to 3, wherein the tube is a clad tube having a brazing material clad on its surface.
